# EUROPÄISCHE PATENTANMELDUNG

(11) **EP 3 184 972 A1**
(43) Veröffentlichungstag der Anmeldung: **28.06.2017**
(21) Anmeldenummer: 16200895.7
(22) Anmeldetag: 28.11.2016
(51) Int. Cl.: G01F 23/30, G01F 25/00, G01F 23/00

(54) **VERFAHREN ZUR ERKENNUNG EINES TANKVORGANGS UND TANKERKENNUNGSEINRICHTUNG**

(30) Priorität: 24.12.2015 DE 102015016927
(71) Anmelder: AUDI AG, 85045 Ingolstadt (DE)
(72) Erfinder: Schuller, Florian, 85737 Ismaning (DE); Haubner, Florian, 85049 Ingolstadt (DE); Klimesch, Michael, 85057 Ingolstadt (DE)

(57) **Zusammenfassung**

Die Erfindung betrifft ein Verfahren zur Erkennung eines Tankvorgangs an einem Kraftfahrzeug (3), wobei mit wenigstens einem Umfeldsensor (9) wenigstens eine Eigenschaft eines Umfelds (11) des Kraftfahrzeugs (3) erfasst wird, und wobei ein Tankvorgang anhand der wenigstens einen erfassten Eigenschaft erkannt wird.

## Beschreibung

Die Erfindung betrifft ein Verfahren zur Erkennung eines Tankvorgangs an einem Kraftfahrzeug und eine Tankerkennungseinrichtung.

Aufgrund der Geometrie eines Kraftstofftanks eines Kraftfahrzeugs sind typischerweise nicht alle Volumenbereiche mit einem Füllstandgeber zur Ermittlung eines Füllstands des Tanks erfassbar. Es ist möglich, dass bei vollständiger Füllung des Tanks bis zu 15 Liter nicht mit dem Füllstandgeber erfassbar sind. Um eine Füllstandanzeige nicht bis zum vollständigen Verbrauch dieses nicht erfassbaren Volumens auf einem maximalen Füllstand stehen zu lassen, besteht die Möglichkeit, eine Menge an in einen Verbrennungsmotor des Kraftfahrzeugs eingebrachtem Kraftstoff zu ermitteln, insbesondere über die Zeit zu integrieren, und anhand dieser dem Tank entnommenen Menge die Füllstandanzeige zu korrigieren. Wird jedoch innerhalb dieses nicht erfassbaren Volumenbereichs nachgetankt, erfährt der Füllstandgeber keine Veränderung, weil das Nachtanken nicht festgestellt werden kann. Obwohl dann der Tank wieder voll ist, bleibt die Füllstandanzeige auf dem zuletzt erreichten, nunmehr zu niedrigen Wert stehen. Selbst wenn bereits eine gewisse Veränderung des Füllstandgebers erfolgt ist, existiert typischerweise ein Schwellenwert von mehreren Litern, beispielsweise 4 Liter, um welche sich der von dem Füllstandgeber detektierte Füllstand ändern muss, bis ein Nachtanken durch Änderung des Zustands des Füllstandgebers erkannt wird. Dies kann insbesondere im Vollbereich des Tanks eine zu grobkörnige Schwelle darstellen, um ein Nachtanken sicher feststellen zu können.

Aus der deutschen Offenlegungsschrift DE 10 2013 001 887 A1 ist ein Verfahren zum Feststellen eines Tankvorgangs bekannt, bei welchem anhand geografischer Daten ermittelt wird, ob sich das Fahrzeug an einer Tankstelle befindet, wobei aus dieser Information auf einen Tankvorgang geschlossen wird. Dies ist aber nicht unter allen Umständen mit hoher Zuverlässigkeit möglich. Dies liegt unter anderem daran, dass im Kartenmaterial von Navigationssystemen meist ein bestimmter Ort einer Tankstelle, beispielsweise die Kasse, als interessierender Punkt (point of interest - POI) markiert ist. In einem bestimmten Umkreis um diesen Ort wird bei einem Haltevorgang beispielsweise eine Schwelle für eine Mindeständerung des Tankinhalts herabgesetzt. Durch einen zu hoch gewählten Umkreis nehmen fälschlicherweise herabgesetzte Schwellen zu, also falschpositive Ergebnisse, wobei durch einen zu niedrig gewählten Umkreis fälschlicherweise nicht herabgesetzte Schwellen, mithin falschnegative Ergebnisse, zunehmen. Hinzu kommt, dass es möglich ist, dass der Fahrer des Fahrzeugs einfach nur in der Nähe einer Tankstelle hält, ohne zu Tanken. Beispielsweise ist es möglich, dass der Fahrer lediglich einen Snack oder eine Zeitschrift erwirbt, ein Getränk zu sich nimmt oder das WC aufsucht, ohne zu tanken. Weiterhin kommt hinzu, dass nicht jedes Kraftfahrzeug serienmäßig ein Navigationssystem aufweist.

Der Erfindung liegt die Aufgabe zugrunde, ein Verfahren zur Erkennung eines Tankvorgangs und eine Tankerkennungseinrichtung zu schaffen, welche die genannten Nachteile nicht aufweisen. Insbesondere soll eine Tankvorgangserkennung mit erhöhter Zuverlässigkeit möglich sein.

Die Aufgabe wird gelöst, indem die Gegenstände der unabhängigen Ansprüche geschaffen werden. Vorteilhafte Ausgestaltungen ergeben sich aus den abhängigen Ansprüchen.

Die Aufgabe wird insbesondere gelöst, indem ein Verfahren zur Erkennung eines Tankvorgangs an einem Kraftfahrzeug geschaffen wird, wobei mit wenigstens einem Umfeldsensor wenigstens eine Eigenschaft eines Umfelds des Kraftfahrzeugs erfasst wird, und wobei ein Tankvorgang anhand der wenigstens einen erfassten Eigenschaft erkannt wird. Mit dem Umfeldsensor ist es möglich, in schneller und präziser Weise eine Eigenschaft des Umfelds des Kraftfahrzeugs zu erfassen, welche auf einen Tankvorgang hindeutet. Dabei kann die Eigenschaft so gewählt werden, dass mit hoher Sicherheit auf einen tatsächlich stattfindenden Tankvorgang geschlossen werden kann. Auf diese Weise kann die Zuverlässigkeit der Erkennung eines Tankvorgangs erhöht werden. Nahezu jedes Kraftfahrzeug neuerer Bauart weist wenigstens einen Umfeldsensor auf, der zur Erkennung eines Tankvorgangs herangezogen werden kann. Somit ist es möglich, die Zuverlässigkeit der Erkennung eines Tankvorgangs zu erhöhen, ohne dass zusätzliche Bauteile in ein Kraftfahrzeug eingebaut werden müssen. Vielmehr kann auf serienmäßig vorhandene Umfeldsensoren zurückgegriffen werden. Das Verfahren braucht also lediglich in eine Betriebssoftware und/oder ein Steuergerät des Kraftfahrzeugs integriert oder implementiert zu werden, was eine kostengünstige Ausgestaltung der Tankerkennung darstellt. Weiterhin wird es möglich, dem Fahrer genaue Informationen über den tatsächlichen Füllstand des Tanks mit hoher Zuverlässigkeit zur Verfügung zu stellen.

Unter einem Umfeldsensor wird insbesondere ein Sensor verstanden, der eingerichtet ist, um eine Eigenschaft eines Umfelds des Kraftfahrzeugs zu erfassen. Der Umfeldsensor ist insbesondere eingerichtet zur unmittelbaren Messung oder Erkennung einer solchen Eigenschaft, insbesondere in Abgrenzung zu einem System, welches eine solche Eigenschaft mittelbar über geografische Daten und zu den geografischen Daten hinterlegten Informationen ermittelt. Vielmehr tritt der Umfeldsensor bevorzugt unmittelbar in physikalische Wechselwirkung mit dem Umfeld des Kraftfahrzeugs, um die wenigstens eine Eigenschaft zu ermitteln.

Unter einem Umfeld des Kraftfahrzeugs wird hier insbesondere ein zu dem Kraftfahrzeug externer Bereich, insbesondere also außerhalb eines Innenraums - einschließlich des Motorraums und eines Gepäckraums - des Kraftfahrzeugs verstanden, insbesondere ein Nahbereich um das Kraftfahrzeug, vorzugsweise ein Bereich, der einen Abstand von bis zu 3 m, vorzugsweise bis zu 2 m, vorzugsweise bis zu 1 m, gemessen von einer Kraftfahrzeugoberfläche aus, einschließt.

Dass ein Tankvorgang anhand der wenigstens einen erfassten Eigenschaft erkannt wird, schließt nicht aus, dass wenigstens ein anderer Parameter zur Erkennung des Tankvorgangs mit herangezogen wird. Es ist also möglich, dass eine Kombination von Parametern zur Erkennung des Tankvorgangs ausgewertet wird, wobei die durch den Umfeldsensor ermittelte wenigstens eine Eigenschaft einer dieser Parameter ist. Es ist aber auch möglich, dass die Erkennung des Tankvorgangs ausschließlich auf die wenigstens eine Eigenschaft des Umfelds, welche durch den Umfeldsensor ermittelt wird, gestützt wird.

Im Rahmen des Verfahrens wird insbesondere eine Umfelderkennung implementiert, wobei aus der Umfelderkennung auf einen Tankvorgang geschlossen wird, gegebenenfalls unter Rückgriff auf wenigstens einen weiteren Parameter.

Gemäß einer Weiterbildung der Erfindung ist vorgesehen, dass die wenigstens eine Eigenschaft ausgewählt ist aus einer Gruppe bestehend aus einer räumlichen Umgebung, einer chemischen Eigenschaft der Umgebung, insbesondere der Umgebungsluft, einem akustischen Umfeld, und einer schriftlich oder bildlich in der Umgebung des Kraftfahrzeugs angeordneten Information. Jede dieser Eigenschaften für sich genommen, aber insbesondere auch eine Kombination dieser Eigenschaften ist geeignet, um mit hoher Sicherheit auf einen Tankvorgang zu schließen. Dabei wird unter einer räumlichen Umgebung insbesondere eine Anordnung von wenigstens einem Gegenstand um das Kraftfahrzeug herum verstanden, wobei als räumliche Umgebung insbesondere die Gegenwart einer Zapfsäule im Umfeld des Kraftfahrzeugs erkannt werden kann. Aus der Anordnung einer Zapfsäule im Nahbereich des Kraftfahrzeugs kann mit hoher Sicherheit auf einen Tankvorgang geschlossen werden.

Unter einer chemischen Eigenschaft der Umgebung, insbesondere der Umgebungsluft, wird insbesondere eine chemische Zusammensetzung der Umgebungsluft und/oder eine Anwesenheit oder Konzentration wenigstens eines bestimmten chemischen Stoffs oder Stoffgemischs in der Umgebung verstanden. Beispielsweise ist es möglich, aus der Detektion bestimmter chemischer Stoffe oder Stoffgemische auf die Präsenz von Betriebsstoffen für das Kraftfahrzeug in dessen Nahbereich zu schließen, woraus wiederum auf einen Tankvorgang geschlossen werden kann.

Unter einem akustischen Umfeld wird insbesondere ein Geräusch- oder Klanghintergrund im Nahbereich des Kraftfahrzeugs verstanden. Dabei treten beispielsweise beim Betrieb einer Zapfsäule charakteristische Geräusche oder Klänge auf, insbesondere durch eine Betriebsstoffpumpe bedingt, anhand derer mit hoher Sicherheit auf einen Tankvorgang geschlossen werden kann.

Unter einer schriftlichen oder bildlichen Informationen in der Umgebung des Kraftfahrzeugs wird insbesondere eine Anordnung von Buchstaben, beispielsweise ein Text, eine Anordnung von Zahlen, beispielsweise ein an einer Zapfsäule angezeigter Preis oder eine getankte Menge von Betriebsstoff, und/oder eine Anordnung wenigstens einem Piktogramm verstanden, wobei auch aus solchen Informationen mit hoher Sicherheit auf einen Tankvorgang geschlossen werden kann. Dabei ist es gegebenenfalls sogar möglich, durch Auswertung von an einer Zapfsäule angezeigten Zahlen auf eine getankte Menge zu schließen, und so mit hoher Präzision den tatsächlichen Füllstand des Tanks zu ermitteln.

Eine räumliche Umgebung sowie eine schriftliche oder bildliche Information kann/können insbesondere mittels einer Kamera als Umfeldsensor, insbesondere auch mittels einer Infrarotkamera, ermittelt werden. Eine räumliche Umgebung kann auch beispielsweise mittels eines Ultraschallsensors oder einer Mehrzahl von Ultraschallsensoren ermittelt werden, die gegebenenfalls auch zu einer Formenerkennung herangezogen werden können. Zusätzlich oder alternativ können zur Umgebungsermittlung und insbesondere Formerkennung auch ein oder mehrere Radarsensor(en) und/oder ein oder mehrere Laserscanner verwendet werden. Eine chemische Eigenschaft der Umgebung kann insbesondere mit einer chemischen Analyseeinrichtung, beispielsweise einem Gasspektographen oder Massenspektrometer, ermittelt werden, wie sie beispielsweise bei einigen Nutzfahrzeugen, etwa einem Spürfahrzeug, serienmäßig vorhanden ist. Ein akustisches Umfeld kann beispielsweise mit Schallsensoren oder Mikrophonen ermittelt werden. Eine schriftliche oder bildliche Information wird vorzugsweise mittels einer Text- und/oder Bilderkennung ausgewertet. Insbesondere Kameras oder abstandgebende Sensoren gehören ohne weiteres zur Serienausstattung moderner Fahrzeuge.

Gemäß einer Weiterbildung der Erfindung ist vorgesehen, dass eine geografische Information erfasst, ausgewertet und zur Erkennung des Tankvorgangs herangezogen wird. Es ist also zusätzlich zu der Verwendung des wenigstens einen Umfeldsensors möglich, geografische Informationen zur Erkennung des Tankvorgangs heranzuziehen und damit die Sicherheit einer korrekten Tankerkennung zu erhöhen. Geografische Informationen werden bevorzugt mittels eines Positioniersystems, insbesondere des globalen Positioniersystems (Global Positioning System - GPS) erfasst. Eine Auswertung der geografischen Informationen schließt vorzugsweise einen Abgleich der von dem Positioniersystem ermittelten geografischen Daten mit einer in dem Kraftfahrzeug hinterlegten oder Online vorhandenen Karte ab, wobei insbesondere ermittelt wird, ob sich das Fahrzeug an einer vorzugsweise in der Karte als POI hinterlegten Tankstelle befindet. Aus einer Kombination der geografischen Anordnung des Fahrzeugs an einer Tankstelle und einer Auswertung der wenigstens einen Eigenschaft des Umfelds kann mit besonders hoher Sicherheit auf einen Tankvorgang geschlossen werden.

Gemäß einer Weiterbildung der Erfindung ist vorgesehen, dass ein Stillstand des Kraftfahrzeugs geprüft wird. Dabei kann die zusätzliche Prüfung des Stillstands weiter zur Verbesserung der Genauigkeit der Tankerkennung beitragen. Ein Tankvorgang findet nämlich typischerweise im Stillstand des Kraftfahrzeugs statt. Der Stillstand wird vorzugsweise also zur Erkennung des Tankvorgangs herangezogen. Vorzugsweise wird zusätzlich eine Stillstanddauer erfasst, die bevorzugt ebenfalls zur Erkennung des Tankvorgangs herangezogen wird. Dabei kann beispielsweise eine Mindeststillstanddauer vorgegeben sein, bei deren Überschreiten auf einen Tankvorgang geschlossen wird. Dem liegt der Gedanke zugrunde, dass ein Tankvorgang üblicherweise zumindest eine bestimmte Mindestzeitdauer benötigt. Steht das Kraftfahrzeug also in der Umgebung einer Zapfsäule für eine geringere Dauer, als es der vorbestimmten Mindestzeitdauer entspricht, hat vermutlich kein Tankvorgang stattgefunden.

Besonders bevorzugt wird eine geografische Information, die erfasst und ausgewertet wird, mit einer Stillstanderkennung und insbesondere einer Erfassung einer Stillstanddauer des Kraftfahrzeugs kombiniert, um einen Tankvorgang zu erkennen. Insbesondere in diesem Fall kann ein Stillstand in der Umgebung einer Zapfsäule festgestellt und so mit hoher Sicherheit ein Tankvorgang erkannt werden.

Gemäß einer Weiterbildung der Erfindung ist vorgesehen, dass die Erkennung des Tankvorgangs durchgeführt wird, wenn ein in einem Tank des Kraftfahrzeugs angeordneter Füllstandgeber in einem für eine Füllstandänderung unempfindlichen Zustand und/oder in einem für eine Füllstandänderung unempfindlichen Bereich angeordnet ist. Dies ist insbesondere dann der Fall, wenn der Tank einen Füllstand aufweist, welcher über eine maximale Messposition des Füllstandgebers hinausreicht. In einem solchen Fall kann ein Nachtanken nicht mit dem Füllstandgeber detektiert werden, sodass sich in besonderer Weise die Vorteile des Verfahrens verwirklichen.

Besonders bevorzugt wird die Erkennung des Tankvorgangs im Rahmen des hier beschriebenen Verfahrens nur dann durchgeführt, wenn sich der Füllstandgeber in dem für eine Füllstandänderung unempfindlichen Zustand und/oder Bereich befindet. Dem liegt der Gedanke zugrunde, dass es in anderen Zuständen oder Bereichen des Füllstandgebers typischerweise keiner Tankerkennung gemäß dem hier beschriebenen Verfahren bedarf, weil ein Nachtanken ohne weiteres durch eine Veränderung des Füllstandgebers detektiert werden kann.

Ein für eine Füllstandänderung unempfindlicher Zustand und/oder Bereich des Füllstandgebers liegt insbesondere dann vor, wenn zum Ermitteln einer Veränderung des Füllstands in dem Tank eine Menge an in einen Verbrennungsmotor des Kraftfahrzeugs eingebrachtem Kraftstoff berücksichtigt wird.

Gemäß einer Weiterbildung der Erfindung ist vorgesehen, dass eine Füllstandanzeige anhand es erkannten Tankvorgangs angepasst wird. Insbesondere kann die Füllstandanzeige anhand des erkannten Tankvorgangs korrigiert werden. Bevorzugt wird die Füllstandanzeige auf einen maximalen Füllstand gesetzt, wenn im Rahmen des Verfahrens ein Tankvorgang erkannt wird.

Gemäß einer Weiterbildung der Erfindung ist vorgesehen, dass ein Einlernen der Erkennung des Tankvorgangs anhand der wenigstens einen erfassten Eigenschaft durchgeführt wird. Mit einem solchen Einlernen, insbesondere einem Machine Learning-Verfahren, kann die Zuverlässigkeit der Erkennung des Tankvorgangs verbessert werden, wobei insbesondere ein Tankvorgangerkennungsalgorithmus auf tatsächlich bei realen Tankvorgängen vorliegende Umstände angepasst werden kann. Auf diese Weise kann die Erkennungsrate sukzessive erhöht werden.

Gemäß einer Weiterbildung der Erfindung ist vorgesehen, dass ein Schwellenwert für eine Füllstandänderung zur Anpassung der Füllstandanzeige herabgesetzt wird, wenn ein Tankvorgang anhand der wenigstens einen erfassten Eigenschaft erkannt wird. Dies ist insbesondere in einem Füllstandbereich vorteilhaft, in welchem der Füllstandgeber seinen Zustand aufgrund des Nachtankens bereits verändert, jedoch nicht hinreichend, um gemäß einer typischerweise gesetzten Schwelle die Füllstandanzeige anzupassen. Wird in diesem Bereich ein Tankvorgang erkannt, kann der Schwellenwert für die Füllstandänderung, ab welchem die Füllstandanzeige angepasst wird, vorteilhaft herabgesetzt werden, sodass ein Nachtankvorgang auch bei kleineren getankten Volumina detektiert werden kann, wenn ein Tankvorgang erkannt wurde. Dabei wird insbesondere ein Schwellenwert für eine Mindeständerung des Tankfüllstands abgesenkt. Nach der Anpassung der Füllstandanzeige und dem erfolgten Tankvorgang kann dann der Schwellenwert vorteilhaft wieder heraufgesetzt werden, um insbesondere zu häufige, den Fahrer möglicherweise irritierende Füllstandanzeigenänderungen zu vermeiden.

Die Aufgabe wird auch gelöst, indem eine Tankerkennungseinrichtung geschaffen wird, die wenigstens einen Umfeldsensor und ein Steuergerät aufweist, wobei das Steuergerät eingerichtet ist zur Durchführung eines Verfahrens nach einer der zuvor beschriebenen Ausführungsformen. Das Steuergerät ist dabei insbesondere mit dem Umfeldsensor zur Erfassung und vorzugsweise Auswertung wenigstens einer Eigenschaft eines Umfelds wirkverbunden. In Zusammenhang mit der Tankerkennungseinrichtung ergeben sich insbesondere die Vorteile, die bereits in Zusammenhang mit dem Verfahren erläutert wurden.

Gemäß einer Weiterbildung der Erfindung ist vorgesehen, dass der Umfeldsensor ausgewählt ist aus einer Gruppe bestehend aus einer Kamera, insbesondere einer im sichtbaren Strahlungsbereich empfindlichen Kamera oder einer Infrarotkamera, einem abstandgebenden Sensor, insbesondere einem Ultraschallsensor oder einer Mehrzahl von Ultraschallsensoren, einem Radarsensor oder einer Mehrzahl von Radarsensoren, einem Laserscanner oder einer Mehrzahl von Laserscannern, einer chemischen Analyseeinrichtung, und einer Schallaufnahmeeinrichtung, insbesondere einem Mikrophon. Wie bereits zuvor ausgeführt, sind diese Sensoren besonders geeignet, um wenigstens eine für einen Tankvorgang charakteristische Eigenschaft eines Umfelds des Kraftfahrzeugs zu detektieren.

Das Steuergerät weist vorzugsweise einen Bilderkennungsalgorithmus und/oder einen Texterkennungsalgorithmus auf, insbesondere um Kamerabilder auszuwerten.

Besonders bevorzugt wird eine Ausgestaltung der Erfindung, bei welcher ein Machine Learning-Verfahren auf Zapfsäulen trainiert wird, um aus Bildern einer Kamera, insbesondere einer Frontkamera eines Kraftfahrzeugs und/oder - falls verfügbar - auch anhand von Bildern von wenigstens einer weiteren Kamera des Kraftfahrzeugs, eine Zapfsäule zu erkennen. Wird eine Zapfsäule mit einer hinreichend hohen Wahrscheinlichkeit erkannt, beispielsweise zunächst mit einer Frontkamera, und hält das Kraftfahrzeug daraufhin unweit der Zapfsäule, dann kann ein Tankvorgang erkannt und/oder eine Schwelle für eine Mindeständerung des Tankfüllstands herabgesetzt werden, da in diesem Fall mit hoher Wahrscheinlichkeit ein Tankvorgang ausgeführt wird.

Zur Erfindung gehört auch ein Kraftfahrzeug, welches eine Tankerkennungseinrichtung nach einem der zuvor beschriebenen Ausführungsbeispiele aufweist. Dabei verwirklichen sich insbesondere die Vorteile, die bereits in Zusammenhang mit der Tankerkennungseinrichtung und dem Verfahren erläutert wurden.

Es zeigt sich, dass moderne Kraftfahrzeuge bevorzugt wenigstens einen der zuvor beschriebenen Umfeldsensoren ohnehin aufweisen, sodass das Verfahren ohne zusätzliche Bauteile an dem Kraftfahrzeug durchgeführt werden kann. Es bedarf also insbesondere lediglich einer Implementierung des Verfahrens auf Softwareebene in ein Steuergerät des Kraftfahrzeugs. Das Kraftfahrzeug ist vorzugsweise als Personenkraftwagen, als Lastkraftwagen oder als Nutzfahrzeug ausgebildet. Insbesondere kann das Kraftfahrzeug auch als Spürfahrzeug ausgebildet sein.

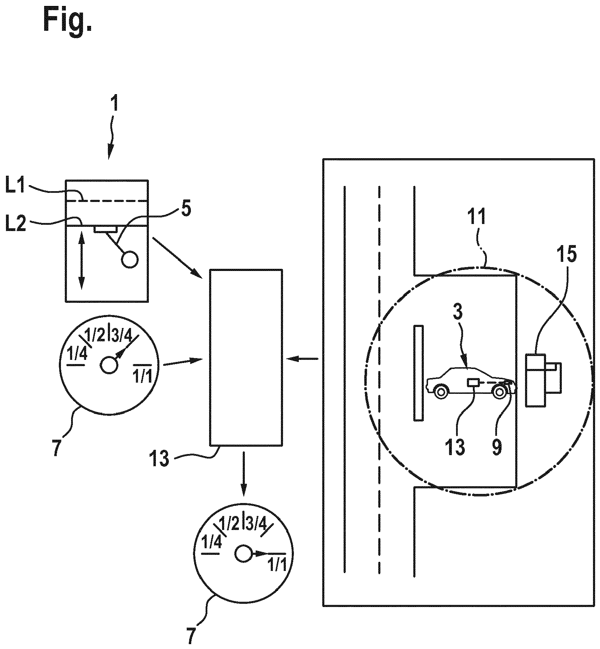

Die Erfindung wird im Folgenden anhand der Zeichnung näher erläutert. Dabei zeigt die einzige Figur eine schematische Darstellung einer Ausführungsform des Verfahrens.

Die einzige Figur zeigt eine schematische Darstellung einer Ausführungsform des Verfahrens. Dabei ist hier schematisch ein Tank 1 eines Kraftfahrzeugs 3 dargestellt, in dem ein Füllstandgeber 5 angeordnet ist. Dieser ist hier in seiner maximalen Position, insbesondere einer Anschlagsposition, dargestellt, wobei er einen über diese Position hinausgehenden Füllstand des Tanks 1 nicht mehr erfassen kann. Ist der Tank 1 voll betankt, steht eine Flüssigkeitsoberfläche des Tankinhalts bei einer hier gestrichelt dargestellten, ersten Linie L1. Ein Verbrauch des Volumens zwischen der ersten, gestrichelten Linie L1 und einer zweiten, durchgezogenen Linie L2 kann systematisch nicht erfasst werden, weil sich in diesem Bereich die Position des Füllstandgebers 5 nicht verändert. Auch darüber hinaus ist eine Erfassung im normalen Betrieb erst möglich, wenn das Volumen des Tankinhalts unter die durch die zweite, durchgezogene Linie L2 markierte Position um eine bestimmte Mindestmenge abgenommen hat, insbesondere um mindestens vier Liter, weil eine solche Mindestmenge als Schwellenwert für die Anpassung einer Füllstandanzeige aufgrund einer Veränderung der Position des Füllstandgebers 5 vorgesehen ist. Nachtankvorgänge in dem hier skizzierten Füllstandbereich können also gar nicht oder kaum detektiert werden.

Um einem Fahrer des Kraftfahrzeugs trotzdem eine Abnahme des Tankfüllstands auf einer Füllstandanzeige 7 darstellen zu können, wird in diesem Füllstandbereich typischerweise eine in einen Verbrennungsmotor des Fahrzeugs 3 eingebrachte Menge des Tankinhalts integriert, und die Füllstandanzeige 7 entsprechend angepasst. Ist beispielsweise das Niveau der hier durchgezogen dargestellten, zweiten Linie L2 erreicht, erreicht die Füllstandanzeige 7 einen hier beispielhaft dargestellten Wert von 3/4.

Erfolgt nun ein Nachtankvorgang, kann dieser nicht mit ausreichender Sicherheit festgestellt werden, sodass es möglich ist, dass die Füllstandanzeige auf ihrem dann fälschlich zu niedrigen Wert verharrt, obwohl der Tank 1 wieder vollständig gefüllt ist.

Das hier vorgeschlagene Verfahren ermöglicht mit hoher Sicherheit eine Erkennung eines Tankvorgangs und somit auch eine Korrektur der Füllstandanzeige 7.

Hierzu weist das Kraftfahrzeug 3 wenigstens einen Umfeldsensor 9 auf, der eingerichtet ist, um wenigstens eine Eigenschaft eines Umfeldes des Kraftfahrzeugs 3 zu erfassen. Der Umfeldsensor 9 ist mit einem Steuergerät 13 wirkverbunden, das eingerichtet ist, um die wenigstens eine Eigenschaft des Umfelds 11 auszuwerten, und anhand der wenigstens einen erfassten Eigenschaft einen Tankvorgang zu erkennen.

Der Umfeldsensor 9 ist bevorzugt als Kamera, als abstandgebender Sensor, insbesondere als Ultraschallsensor oder Anordnung von Ultraschallsensoren, als Radarsensor oder Anordnung von Radarsensoren, als Laserscanner oder Anordnung von Laserscannern, als chemische Analyseeinrichtung, und/oder als Schallaufnahmeeinrichtung, insbesondere Mikrophon, ausgebildet. Es ist möglich, dass das Steuergerät 13 eine Bild- und/oder Texterkennung aufweist.

Mittels des Umfeldsensors 9 wird vorzugsweise wenigstens eine Eigenschaft erfasst, die ausgewählt ist aus einer Gruppe bestehend aus einer räumlichen Umgebung, einer chemischen Eigenschaft der Umgebung, insbesondere der Umgebungsluft des Kraftfahrzeugs 3, einem akustischen Umfeld desselben, und einer schriftlichen oder bildlichen in der Umgebung des Kraftfahrzeugs angeordneten Information. Insbesondere ist das Steuergerät 13 bevorzugt eingerichtet zur Erkennung einer Zapfsäule 15. Dabei ist es möglich, dass das Steuergerät 13 beziehungsweise der Tankerkennungsalgorithmus in dem Steuergerät 13 mittels eines Machine Learning-Verfahrens auf die Erkennung einer Zapfsäule 15 konditioniert wird.

Es ist möglich, dass zusätzlich eine geografische Information durch das Steuergerät 13 erfasst, ausgewertet und zur Erkennung des Tankvorgangs herangezogen wird.

Vorzugsweise wird ein Stillstand des Kraftfahrzeugs 3 geprüft, wobei bevorzugt auch eine Stillstanddauer erfasst wird, und wobei der Stillstand und vorzugsweise die Stillstanddauer zur Erkennung des Tankvorgangs herangezogen wird/werden.

Eine Erkennung des Tankvorgangs im Rahmen des hier vorgeschlagenen Verfahrens wird bevorzugt nur dann durchgeführt, wenn der Füllstandgeber 5 in dem Tank 1 des Kraftfahrzeugs 3 in dem in der Figur schematisch dargestellten, für eine Füllstandänderung unempfindlichen Zustand und/oder Bereich angeordnet ist.

Es ist zusätzlich oder alternativ möglich, dass ein Schwellenwert für eine Füllstandänderung, der zur Anpassung der Füllstandanzeige vorgesehen ist, herabgesetzt wird, wenn ein Tankvorgang anhand der wenigstens einen erfassten Eigenschaft erkannt wird.

Mittels des sicher erfassten Tankvorgangs kann das Steuergerät 13, wie hier schematisch dargestellt, die Füllstandanzeige 7 korrigieren, wobei diese insbesondere wieder auf einen maximalen Füllstand gesetzt werden kann.

Insgesamt zeigt sich, dass mit dem hier vorgeschlagenen Verfahren und der Tankerkennungseinrichtung mit hoher Sicherheit ein Tankvorgang insbesondere auch in einem Bereich erkannt werden kann, in welchem ein Füllstandgeber 7 für den Tankvorgang unempfindlich ist, wobei einem Fahrer des Kraftfahrzeugs 3 dann zutreffende Informationen über den Füllstand des Tanks 1 angezeigt werden können.

## Patentansprüche

1. Verfahren zur Erkennung eines Tankvorgangs an einem Kraftfahrzeug (3), wobei mit wenigstens einem Umfeldsensor (9) wenigstens eine Eigenschaft eines Umfelds (11) des Kraftfahrzeugs (3) erfasst wird, und wobei ein Tankvorgang anhand der wenigstens einen erfassten Eigenschaft erkannt wird.

2. Verfahren nach Anspruch 1, **dadurch gekennzeichnet, dass** die wenigstens eine Eigenschaft ausgewählt ist aus einer Gruppe bestehend aus einer räumlichen Umgebung, einer chemischen Eigenschaft der Umgebung, einem akustischen Umfeld, und einer schriftlich oder bildlich in der Umgebung des Kraftfahrzeugs (3) angeordneten Information.

3. Verfahren nach einem der vorhergehenden Ansprüche, **dadurch gekennzeichnet, dass** eine geografische Information erfasst, ausgewertet und zur Erkennung des Tankvorgangs herangezogen wird.

4. Verfahren nach einem der vorhergehenden Ansprüche, **dadurch gekennzeichnet, dass** ein Stillstand des Kraftfahrzeugs (3) geprüft wird, wobei vorzugsweise eine Stillstanddauer erfasst wird, und wobei der Stillstand und vorzugsweise die Stillstanddauer zur Erkennung des Tankvorgangs herangezogen wird/werden.

5. Verfahren nach einem der vorhergehenden Ansprüche, **dadurch gekennzeichnet, dass** die Erkennung des Tankvorgangs durchgeführt wird, wenn ein Füllstandgeber (5) in einem Tank (1) des Kraftfahrzeugs (3) in einem für eine Füllstandänderung unempfindlichen Zustand und/oder Bereich angeordnet ist.

6. Verfahren nach einem der vorhergehenden Ansprüche, **dadurch gekennzeichnet, dass** eine Füllstandanzeige (7) anhand des erkannten Tankvorgangs angepasst wird.

7. Verfahren nach einem der vorhergehenden Ansprüche, **dadurch gekennzeichnet, dass** ein Einlernen der Erkennung des Tankvorgangs anhand der wenigstens einen erfassten Eigenschaft durchgeführt wird.

8. Verfahren nach einem der vorhergehenden Ansprüche, **dadurch gekennzeichnet, dass** ein Schwellenwert für eine Füllstandänderung zur Anpassung der Füllstandanzeige (7) herabgesetzt wird, wenn ein Tankvorgang anhand der wenigstens einen erfassten Eigenschaft erkannt wird.

9. Tankerkennungseinrichtung, mit wenigstens einem Umfeldsensor (9) und einem Steuergerät (13), **dadurch gekennzeichnet, dass** das Steuergerät (13) eingerichtet ist zur Durchführung eines Verfahrens nach einem der Ansprüche 1 bis 8.

10. Tankerkennungseinrichtung nach Anspruch 9, **dadurch gekennzeichnet, dass** der wenigstens eine Umfeldsensor (9) ausgewählt ist aus einer Gruppe bestehend aus einer Kamera, einem abstandgebenden Sensor, einer chemischen Analyseeinrichtung, und einer Schallaufnahmeeinrichtung, insbesondere einem Mikrophon.
